# EUROPÄISCHE PATENTSCHRIFT

(11) **EP 1 594 387 B1**
(45) Veröffentlichungstag und Bekanntmachung des Hinweises auf die Patenterteilung: **14.01.2009**
(21) Anmeldenummer: 03799463.9
(22) Anmeldetag: 16.11.2003
(51) Int. Cl.: A47L 11/164, A47L 11/283, A47L 11/30

(54) **REINIGUNGSKISSEN FÜR EIN- ODER MEHRSCHEIBEN-REINIGUNGSMASCHINEN**
CLEANING PAD FOR SINGLE-DISK OR MULTI-DISK CLEANING MACHINES
TAMPON NETTOYEUR POUR MACHINES DE NETTOYAGE MONODISQUE OU POLYDISQUE

(30) Priorität: 16.11.2002 DE 10253647
(43) Veröffentlichungstag der Anmeldung: 16.11.2005
(73) Patentinhaber: Rittgasser, Johann, 61184 Karben (DE)
(72) Erfinder: RITTGASSER, Johann, 61184 Karben (DE); RAUH, Detlef, 96369 Weissenbrunn (DE)
(74) Vertreter: Harders, Gerhard
(86) Internationale Anmeldenummer: PCT/EP2003/012798
(87) Internationale Veröffentlichungsnummer: WO 2004/045359

(56) Entgegenhaltungen:
- EP-A- 0 112 405
- WO-A-01/15871
- US-A- 3 703 739
- US-A- 5 893 191
- PATENT ABSTRACTS OF JAPAN Bd. 2002, Nr. 07, 3. Juli 2002 (2002-07-03) & JP 2002 085309 A (PATENT KG:KK), 26. März 2002 (2002-03-26)

## Beschreibung

Die vorliegend Erfindung betrifft Reinigungskissen gemäß dem Oberbegriff des Hauptanspruchs.

Reinigungskissen für Ein- oder Mehrscheibenreinigungsmaschinen, auch Reinigungspads genannt, werden an der dem Reinigungsgut zugekehrten Seite der Treibteller von Reinigungsmaschinen angeordnet, wodurch sie in drehende Bewegung versetzt werden, um das Reinigungsgut zu reinigen oder zu polieren. Solche Reinigungskissen sind beispielsweise in der DE 44 17 535 A1 oder der DE 195 45 242 A1 beschrieben.'Sie bestehen aus einem Textilkissen, das mit einem Halteelement an dem Treibteller befestigt wird. Bei der Reinigung von stark verschmutzten textilen Bodenbelägen, wie Teppichen, ist die Reinigungswirkung dieser Textilkissen häufig ungenügend. Sie haben ausserdem den Nachteil, dass sie häufig gereinigt werden müssen, um ihre Reinigungsfähigkeit aufrecht zu erhalten. Auch verschleissen sie relativ schnell, sodass sie häufig ersetzt werden müssen.

Andere Reinigungskissen sind aus der US-A-3 703 739 und aus der US-A- 5 893 191 bekannt.

Aufgaben der vorliegenden Erfindung ist es, ein Reinigungskissen zu schaffen, dessen Reinigungswirkung gegenüber den herkömmlichen Reinigungskissen wesentlich verbessert ist, das sich aber ohne Umbau der Reinigungsmaschinen an den herkömmlichen Treibtellern anbringen läßt und das ausserdem einen geringen Verschleiss aufweist und deshalb weniger häufig erneuert werden muss. Das Reinigungskissen soll sich nach Beendigung des Reinigungsvorgangs leicht reinigen lassen.

Gelöst wird diese Aufgabe erfindungsgemäß durch ein gattungsgemäßes Reinigungskissen mit den Merkmalen des kennzeichnenden Teils des Hauptanspruchs. Die Unteransprüche geben bevorzugte Ausgestaltungen der Erfindung wieder.

Erfindungsgemäss ist vorgesehen, dass an der Arbeitsfläche, d.h. an der der zu reinigenden Fläche zugewandten Seite des Reinigungskissens, eine Schlingenware mit unterschiedlich ausgestalteter Oberfläche vorgesehen ist. Dabei werden beispielsweise Frotteestrukturen, Velourstrukturen, unterbrochene.Schlingenstrukturen (Berberoptik), vollflächige Schlingenstrukturen (Berberoptik) eingesetzt, wodurch oberflächlich unterschiedliche Bereiche gestalten lassen, die eine reinigende und polierende Wirkung aufweisen. Durch Anordnung solcher unterschiedlicher Bereiche auf einem Reinigungskissen in Arbeitsrichtung hinereinander lassen sich schmutzlösende, schmutzaufnehmende und schmutztransportierende Abschnitte so auf dem Reinigungskissen anordnen, dass eine gute und langandauernde Reinigungswirkung erzielt wird.

An das Arbeitskissen schliesst sich an dessen der zu reinigenden Fläche abgewandten Seite eine saugfähige Schicht an, die beispielsweise aus einem Vlies, genadelten Vlies, Frotte- oder Baumwollgewebe bestehen kann. Auf die saugfähige Schicht folgt ein regenerativer Kern, beispielsweise aus einem Natur- oder Kunstschwamm oder Watte. Darüber ist eine weitere saugfähige Schicht und abschliessend eine Deckschicht angeordnet, die aus einem formstabilen Material besteht. An dieser Deckschicht sind Halteelemente angeordnet, die eine Befestigung des Reinigungskissens an der Reinigungsmaschine ermöglichen.

Überraschenderweise zeigt ein solcher Aufbau aus insgesamt fünf Schichten aus Arbeitsfläche, Vliesen und Schwämmen eine wesentlich verbesserte Reinigungsleistung gegenüber den herkömmlichen Reinigungskissen. Auch der Verschleiss wird wesentlich verringert. Das Reinigungskissen lässt sich durch Auswaschen mit Wasser leicht reinigen.

Gegenüber dem bevorzugten Aufbau des Reinigungskissens aus fünf Schichten ist auch ein vierschichtiger Aufbau möglich, bei dem die saugfähige Schicht zwischen dem regenarativen Kern und der Deckschicht weggelassen wird. Diese Anordnung kann bei weniger hohen Anforderungen an die Reinigungswirkung und die Auswaschbarkeit des verschmutzten Reinigungskissens nochbrauchbare Ergebnisse erzielen.

Die Arbeitsfläche kann aus unterschiedlichen Materialien bestehen, z. B. aus Schlingenmaterial, wie Rautenmuster, Berberoptik, unterbrochene Berberoptik, Mikroschlingen, Velour, Gewirke oder Kettengewirke. Es können auch Bürsten in die Arbeitsfläche eingearbeitet werden. Vorzugsweise wird die Oberfläche der Arbeitsfläche abschnittsweise unterschiedlich ausgestaltet, wodurch sich die Reinigungswirkung verbessern lässt Bevorzugt werden genadelte Vliese eingesetzt. Sie können als Schlingenmaterial ausgestaltet sein, auch mit getrennter Schlinge (Velours). Die Fasern können Kunstfasern sein, z.B. aus Polyamid, Polyester, Viscose, Polypropylen, Nylon, oder aus natürlichen Fasern, z. B. Wolle, Baumwolle, oder Gemische aus den genannten Fasern. Die Ränder der Textilkissen können gekettelt werden oder auf andere Weise mit den benachbarten Schichten verbunden werden.

Die Schwammkissen können aus natürlichen Materialien, wie z. B. Naturschwamm oder aus synthetischen Matrialien, wie z. B. Kunstschwamm bestehen.

Die Fäden der Textilkissen haben vorzugsweise einen Bereich der Fasereinzeltiter von etwa 10 den bis 200 den. Die Textilkissen haben Flächengewichte der Einzellagen im Bereich zwischen 100 und 2000 g/m².

Die einzelnen Schichten des Reinigungskissens können durch übliche Verbindungstechniken miteinander verbunden werden. Vorzugsweise werden sie durch Nähte miteinander vernäht, wobei die Nähte radial oder konzentrisch angeordnet werden können. Auch eine Kombination von radialen und konzentrischen Nähten ist möglich.

Die Reinigungskissen werden vorzugsweise in Form von Rundkissen eingesetzt. Für Spezielle Zwecke sind aber auch andere Ausformungen möglich, beispielsweise ovale Kissen für Spezialmaschinen für die Boden- und Wandreinigung, oder rechteckige oder quadratische Kissen für Mobhalter oder Spezialmaschinen.

Aufgrund ihrer speziellen Schichtstruktur lassen sich die erfindungsgenässen Reinigungskissen leicht reinigen. Hierzu werden sie in eine selbstreinigende Lösung gelegt und anschliessend in einer Mobpresse, Schleuder, Quetsch- oder Rollenpresse von den Schmutzpartikeln befreit.

Eine gründliche Wäsche ist erst nach einem mehrmonatigen Reinigungsbetrieb erforderlich.

Im Gegensatz zu den üblichen synthetischen Reinigungskissen, die nach Reinigungscyclen von ca. 10 bis 30 m² erneuert werden müssen, weisen die erfindungsgemässen Reinigungskissen wesentlich längere Einsatzzeiten auf.

Die erfindungsgemäßen Reinigungskissen eignen sich zum Reinigen, Polieren, Scheuern von textilen Bodenbelägen, Teppichen, Fußböden, auch Hartfußböden, und anderen verschmutzten Flächen.

Mit den erfindungsgemässen Reinigungskissen können selbst grosse Bodenflächen mit nur zwei Reinigungskissen in Verbindung mit einem handelsüblichen Fahreimer und dessen Presse im Wechsel bearbeitet werden, und zwar nass oder feucht, da sie im Gegensatz zu herkömmlichen Reinigungskissen während der Reinigungsarbeiten an Ort und Stelle im Wechsel von gespeichertem Schmutz befreit und im Eimer ausgepresst werden können.

Die Schmutzaufnahme der Reinigungskissen ist durch den Mehrschichtaufbau und das Anziehungsverhalten des regenerativen Kerns in Verbindung mit Wasser nicht nur erheblich besser, sondern auch die Reinigungsergebnisse am Bodenbelag sind wesentlich gründlicher.

Die verwendeten Schichtmaterialien sind durchlässig für Schmutz und Wasser. Durch die Reinigunhsmaschine wird während der Drehung eine Feuschtigkeitsverdrängung durch Wärme sowie ein zusätzliches Vakuum erzeugt.

Die Erfindung wird nachfolgend anhand der Figurenbeschreibung beispielhaft näher erläutert.
- Figur 1: zeigt ein Reinigungskissen mit einem Schichtaufbau aus fünf Schichten;
- Figur 2: zeigt ein Reihigungskissen mit einem Schichtaüfbau aus vier Schichten;
- Figur 3: zeigt das Reinigungskissen der Fig. 1 in einer Draufsicht.

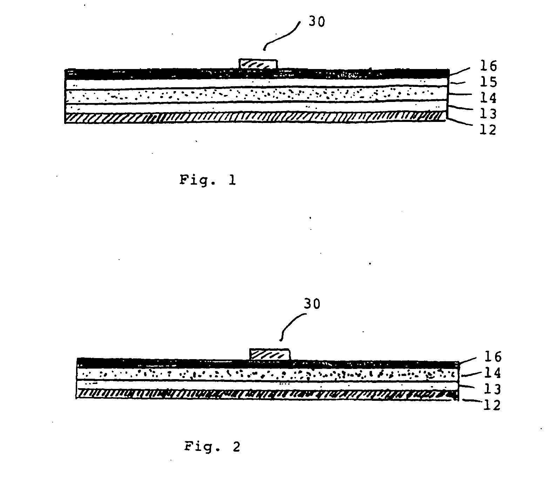

Das fünflagige Reinigungskissen der Figur 1 enthält als untere, d. h. dem zu reinigenden Gut zugekehrte Schicht ein Textilkissen 12 aus einem grob genadelten Vlies, dem sich in Richtung zum Treibteller der Reinigungsmaschine hin eine saugfähige Schicht 13 anschliesst, die aus einem Vlies, genadelten Vlies, Frottee-, Wolle- oder Baumwollgewebe bestehen kann. Diese saugfähige Schicht dient als Haltereservoir für die zur Reinigung benötigte Feuchtigkeit. An die saugfähige Schicht schliesst sich ein regenerativer Kern an, der aus einem Natur- oder Kunstschwamm oder aus Watte bestehen kann. Der regenerative Kern 14 nimmt den von der Arbeitsschicht 12 abgelösten Schmutz auf und lässt sich durch Auswaschen wieder regenerieren. An die regenerative Kernschicht 14 schliesst sich eine zweite saugfähige Schicht 15 an, die an ihrer Oberseite von einer Deckschicht 16 abgedeckt wird Die Deckschicht 16 besteht aus einem formstabilen Material und dient als Träger für das Reinigungskissen sowie zur Aufnahme eines Befestigungselements 30, das zur Befestigung des Reinigungskissens 10 an der Reinigungsmaschine dient.

Es ist auch möglich, die zweite saugfähige Schicht aus einem formstbilen Material herzustellen. In diesem Fall kann eine zusätzliche Deckschicht entfallen, sodass das Reinigungskissen lediglich vier Schichten aufweist. Eine solche Anordnung ist in Figur 2 dargestellt. Die Bezugszahlen in Figur 2 für die einzelnen Schichten sind die gleichen wie in Figur 1.

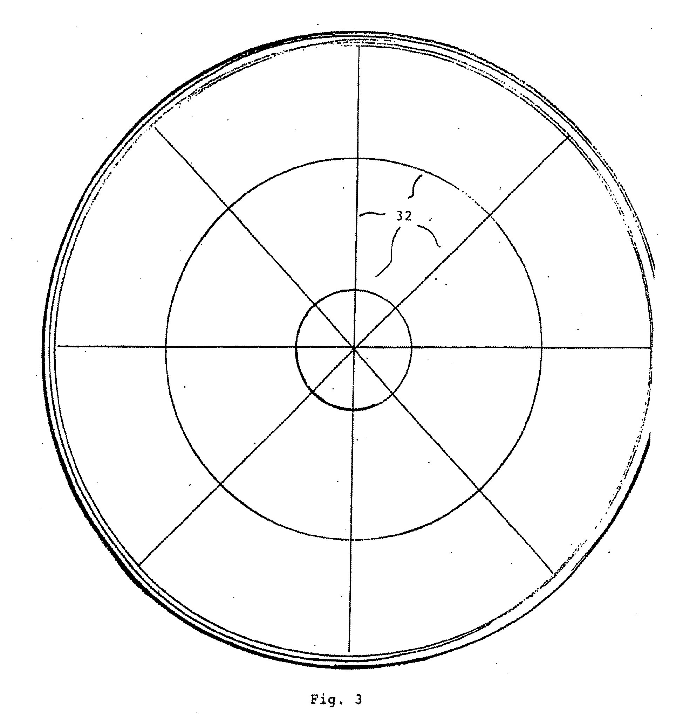

In der Figur 3 ist das Reinigungskissen in einer Draufsicht dargestellt. Die Nähte 32, mit denen die einzelnen Schichten miteinander vernäht sind, sind sowohl konzentrisch.als auch radial radial angeordnet, wodurch die Arbeitsflächen 12 in einzelne Segmente unterteilt werden, die hinsichtlich ihrer Oberflächenbeschaffenheit unterschiedlich ausgestaltet werden können.

## Patentansprüche

1. Reinigungskissen für Ein- und Mehrscheiben-Reinigungsmaschinen, enthaltend ein äusseres Textilkissen und ein Halteelement zur Halterung des Reinigungskissens an der Reinigungsmaschine,
**dadurch gekennzeichnet, dass** das Reinigungskissen (10) aus mindestens vier Schichten besteht, wobei anschliessend an das als Arbeitskissen (12) dienende Textilkissen mindestens eine saugfähige schicht (13) aus einem Vlies, genadelten Vlies, Frotttee- oder Baumwollgewebe und an diese anschliessend eine regenerative Kernschicht (14) aus einem Natur- oder Kunstschwamm oder Watte und eine Deckschicht (16) angeordnet ist.

2. Reinigungskissen nach Anspruch 1, **dadurch gekennzeichnet, dass** das Reinigungskissen (10) mindestens fünf Schichten enthält, ein äusseres Arbeitskissen (12), eine jeweils an die vorige *Schicht anschliessende saugfähige* Schicht (14), regenerative Kernschicht (16), eine weitere saugfähige Schicht (15) sowie eine Deckschicht (16).

3. Reinigungskissen nach den Ansprüchen 1 oder 2, **dadurch gekennzeichnet, daß**
das Halteelement an der oberen Deckschicht (16, 26) oder dem oberen Textilkissen (22) angeordnet ist.

4. Reinigungskissen nach einem der vorigen Ansprüche, **dadurch gekennzeichnet, daß**
das Textilkissen ein genadeltes Flies enthält.

5. Reinigungskissen nach einem der vorigen Ansprüche, **dadurch gekennzeichnet, daß**
das Textilkissen folgende Fasern enthält: Kunstfasern, wie Polyam: Polyester-, Viscose-, Polypropylen-Fasern; und/oder Naturfasern, wie Baumwolle, Wolle.

6. Reinigungskissen nach einem der vorigen Ansprüche, **dadurch gekennzeichnet, daß**
das Textilkissen (12,22) Fasern mit einem Fasereinzeltiter-Bereich von 10 - 200 den enthält.

7. Reinigungskissen nach einem der vorigen Ansprüche, **dadurch gekennzeichnet, daß** das Textilkissen (12, 22) ein Flächengewicht im Bereich von 100 - 2000 g/m² hat.

8. Reinigungskissen nach einem der Ansprüche 1 bis 3, **dadurch gekennzeichnet, daß**
die regenerative Kernschicht (14) natürliche oder synthetische Schwammmaterialien enthält.

9. Reinigungskissen nach einem der vorigen Ansprüche, **dadurch**
**gekennzeichnet, daß**
das Halteelement (30) einen Klett- oder Bajonettverschluß enthält.

10. Reinigungskissen nach Anspruch 1 oder 2, **dadurch gekennzeichnet, daß** das Arbeitskissen (12) ein genadeltes Vlies enthält.

## Claims

1. A cleaning pad for single and multi-disk cleaning machines, comprising an outer textile pad and a fastening element for holding the cleaning pad on the cleaning machine,
**characterized in that** the cleaning pad (10) consists of at least four layers, where the textile pad serving as the working pad (12) is followed in succession by at least one absorbent layer (13) made of a nonwoven, a needle-punched nonwoven, terry cloth or cotton fabric, and the absorbent layer is followed in succession by a regenerative core layer (14) made of a natural or artificial sponge or cotton wool, and a cover layer (16).

2. The cleaning pad according to claim 1, **characterized in that** the cleaning pad (10) comprises at least five layers, namely, an outer working pad (12), an absorbent layer (14) following the previous layer, a regenerative core layer (16), another absorbent layer (15), and a cover layer (16).

3. The cleaning pad according to claims 1 or 2, **characterized in that**
the fastening element is attached to the upper cover layer (16, 26) or to the upper textile pad (22).

4. The cleaning pad according to one of the preceding claims, **characterized in that**
the textile pad comprises a needle-punched nonwoven.

5. The cleaning pad according to one of the preceding claims, **characterized in that**
the textile pad comprises the following fibres: synthetic fibres, such as polyamide, polyester, viscose, or polypropylene fibres; and/or natural fibres, such as cotton or wool.

6. The cleaning pad according to one of the preceding claims, **characterized in that**
the textile pad (12, 22) comprises individual fibres with a titer in the range of 10-200 denier.

7. The cleaning pad according to one of the preceding claims, **characterized in that** the textile pad (12, 22) has a mass per unit area in the range of 100 - 2,000 g/m².

8. The cleaning pad according to one of claims 1 to 3, **characterized in that**
the regenerative core layer (14) comprises natural or artificial sponge materials.

9. The cleaning pad according to one of the preceding claims, **characterized in that**
the fastening element (30) comprises a Velcro strip fastener or bayonet catch.

10. The cleaning pad according to claim 1 or 2, **characterized in that** the working pad (12) comprises a needle-punched nonwoven.

## Revendications

1. Tampon nettoyeur pour machines de nettoyage monodisque ou polydisques, comportant un tampon textile extérieur et un élément de retenue pour la fixation du tampon nettoyeur sur la machine de nettoyage,
**caractérisé en ce que**
le tampon nettoyeur (10) comprend au moins quatre couches, au moins une couche (13) absorbante à base d'un non-tissé, d'un non-tissé aiguilleté, d'un tissu éponge ou d'un tissu de coton étant disposée à la suite du tampon textile servant de tampon de travail (12), et, à la suite de celle-ci, une couche centrale (14) régénératrice à base d'une éponge naturelle ou d'une éponge synthétique ou de ouate et une couche de revêtement (16) étant disposées.

2. Tampon nettoyeur selon la revendication 1, **caractérisé en ce que**
le tampon nettoyeur (10) comporte au moins cinq couches, à savoir un tampon de travail (12) extérieur et, respectivement à la suite de la couche précédante, une couche (14) absorbante, une couche centrale (16) régénératrice, une autre couche (15) absorbante et une couche de revêtement (16).

3. Tampon nettoyeur selon la revendication 1 ou 2, **caractérisé en ce que** l'élément de retenue est disposé sur la couche de revêtement (16, 26) supérieure ou sur le tampon textile (22) supérieur.

4. Tampon nettoyeur selon l'une quelconque des revendications précédentes,
**caractérisé en ce que**
le tampon nettoyeur comporte un non-tissé aiguilleté.

5. Tampon nettoyeur selon l'une quelconque des revendications précédentes,
**caractérisé en ce que**
le tampon textile comporte les fibres suivantes : des fibres synthétiques telles que des fibres de polyamide, de polyester, de viscose, de polypropylène ; et/ou des fibres naturelles telles que le coton, la laine.

6. Tampon nettoyeur selon l'une quelconque des revendications précédentes,
**caractérisé en ce que**
le tampon textile (12, 22) comporte des fibres avec une plage de titre individuel de fibre de 10 à 200 deniers.

7. Tampon nettoyeur selon l'une quelconque des revendications précédentes,
**caractérisé en ce que**
le tampon textile (12, 22) a une masse surfacique de 100 à 2 000 g/m².

8. Tampon nettoyeur selon l'une quelconque des revendications 1 à 3, **caractérisé en ce que**
la couche centrale (14) régénératrice comporte des matériaux d'éponge naturels ou synthétiques.

9. Tampon nettoyeur selon l'une quelconque des revendications précédentes,
**caractérisé en ce que**
l'élément de retenue (30) comporte une fermeture autoagrippante ou une fermeture à baïonnette.

10. Tampon nettoyeur selon la revendication 1 ou 2, **caractérisé en ce que** le tampon de travail (12) comporte un non-tissé aiguilleté.
